# EUROPEAN PATENT APPLICATION

(11) **EP 4 730 277 A1**
(43) Date of publication of application: **22.04.2026**
(21) Application number: 25201476.6
(22) Date of filing: 10.09.2025
(51) Int. Cl.: G06V 30/10, G06V 30/12

(54) **INFORMATION PROCESSING SYSTEM AND CONTROL METHOD FOR INFORMATION PROCESSING SYSTEM**

(30) Priority: 18.10.2024 JP 2024184175
(71) Applicant: Toshiba TEC Kabushiki Kaisha, Tokyo 141-8562 (JP)
(72) Inventor: Sasaki, Takahiro, Tokyo, 141-8562 (JP)
(74) Representative: Bandpay & Greuter

(57) **Abstract**

According to one embodiment, an information processing system includes a receiving unit, an OCR execution unit, a management unit, an extraction unit, a correction candidate output unit, and a correction acceptance unit. The receiving unit receives image information. The OCR execution unit performs character recognition on the image information using OCR. The management unit stores definition data that defines a workflow based on the image information. The extraction unit extracts a usage item handled in the workflow from the definition data. The correction candidate output unit extracts a value corresponding to the usage item from a recognition result obtained by the OCR execution unit and outputs the value as a correction candidate. The correction acceptance unit accepts a correction for the correction candidate.

## Description

### FIELD

Embodiments described herein relate generally to an information processing system and a control method for the information processing system.

### BACKGROUND

In order to perform processing using results of optical character recognition (OCR), devices, systems, methods, and programs are known that determine the type of text information being extracted by OCR and then perform processing according to the determined type. However, if the user is required to confirm and correct even just some of the data to check whether the results of OCR are correct, then the amount of work required of the user increases, which is inconvenient to the user

### BRIEF DESCRIPTION OF THE DRAWINGS

FIG. 1 is a block diagram of an information management system including an information processing system according to an embodiment.
FIG. 2 is a block diagram of a processing server.
FIG. 3 is a block diagram of a file server.
FIG. 4 is a block diagram of an OCR server.
FIG. 5 is a block diagram illustrating functional units of an information processing system.
FIG. 6 is a flowchart illustrating a workflow setting operation in an information processing system.
FIG. 7 depicts an example of a usage item list used in an information processing system.
FIG. 8 is a flowchart illustrating a workflow executing operation in an information processing system.
FIG. 9 is a diagram illustrating an example of a screen displayed on a user terminal by an information processing system.

### DETAILED DESCRIPTION

An embodiment described herein provides an information processing system and a control method for the information processing system involving OCR that reduces the amount of work required of the user.

In general, according to one embodiment, an information processing system includes a receiving unit configured to receive image information corresponding to a document from a user terminal; an OCR execution unit configured to perform character recognition on the image information using optical character recognition (OCR); a management unit configured to store definition data that defines a workflow associated with the image information; an extraction unit configured to extract a usage item from the definition data of the workflow; a correction candidate output unit configured to extract a value corresponding to the extracted usage item from a recognition result from the OCR execution unit and output the value as a correction candidate; and a correction acceptance unit configured to receive a correction of the correction candidate from the user terminal.

Hereinafter, certain example embodiments will be described with reference to the drawings. In the following description, components having substantially the same functions and configurations are denoted by the same reference symbols. In addition, the example embodiments described below are merely illustrative of the technical ideas and concepts of the present disclosure. The present disclosure is not necessarily limited to the specific materials, shapes, structures, and arrangements of components in these examples. The embodiments can be modified in various ways and still be within the scope of the present disclosure.

### <Configuration>

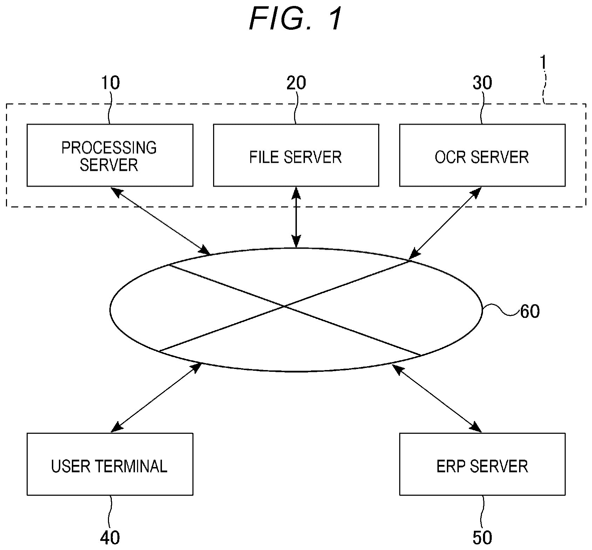

FIG. 1 is a block diagram illustrating an example of a configuration of an information management system including an information processing system according to an embodiment. The information management system manages information about documents such as slips of paper, receipts, invoices, bills, notes, or the like. The information management system includes an information processing system 1, a user terminal 40, and an enterprise resource planning (ERP) server 50. Each of the information processing system 1, the user terminal 40, and the ERP server 50 is connected to a network 60.

The information processing system 1 is a system that, upon receiving image information of a document from a user, attempts to recognize characters on the document using OCR processing. The system asks the user to confirm the recognition result, and then registers (stores) the recognition result in the ERP server. The information processing system 1 includes a processing server 10, a file server 20, and an OCR server 30. The processing server 10 controls an overall operation of the information processing system 1. The file server 20 stores information (e.g., files). The OCR server executes OCR processing to recognize character (text) information in image data. Each of the processing server 10, the file server 20, and the OCR server 30 is connected to the network 60.

The user terminal 40 is, for example, an information processing terminal such as a personal computer (PC), a tablet, or a smartphone. The user operates the user terminal 40 to exchange information with the information processing system 1.

The ERP server 50 executes enterprise resource planning software.

The network 60 is a communication path formed by a single network or a combination of networks, for example, a wired or wireless local area network (LAN), the Internet, a telephone communication network, and the like.

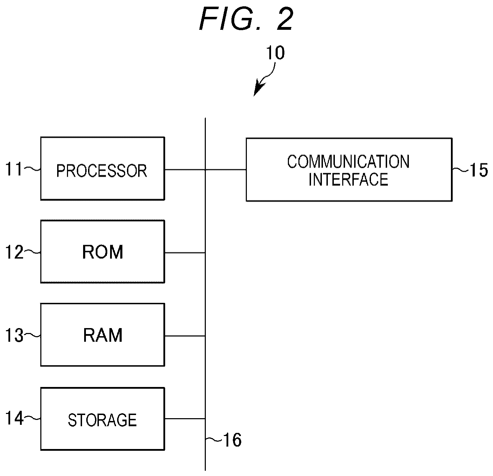

FIG. 2 is a block diagram illustrating an example of a configuration of the processing server according to the embodiment. The processing server 10 includes a processor 11, a read only memory (ROM) 12, a random access memory (RAM) 13, a storage 14, a communication interface 15, and a system bus 16. The system bus 16 comprises an address bus, a data bus, a control signal line, and the like. The system bus 16 connects the processor 11, the ROM 12, the RAM 13, the storage 14, and the communication interface 15 to each other. The processor 11, the ROM 12, the RAM 13, and the storage 14 are connected to each other by the system bus 16.

The processor 11 controls each of portions to implement various functions of the processing server 10 according to an operating system or an application program. The processor 11 is, for example, a central processing unit (CPU).

The ROM 12 is a non-volatile storage device. The ROM 12 stores a preset operating system or application program, control data, and the like.

The RAM 13 is a volatile storage device. The RAM 13 is used as a work area where data can be appropriately rewritten by the processor 11. The RAM 13 is also used as a buffer memory for temporarily storing data.

The storage 14 is an auxiliary storage unit or the like. The storage 14 stores data used by the processor 11 in performing various kinds of processing or data generated by the processing in the processor 11. The storage 14 may also store the application program described above. The storage 14 is, for example, an EEPROM (Electric Erasable Programmable Read Only Memory), an HDD (Hard Disk Drive), or an SSD (Solid State Drive).

The communication interface 15 is an interface for communicating with other devices connected to a network. The communication interface 15 is used for communication with external devices. In this context, external devices include, for example, the file server 20, the OCR server 30, the user terminal 40, and the ERP server 50. The communication interface 15 has a LAN connector or the like, for example. The communication interface 15 may wirelessly communicate with other devices according to a communication standard such as Wi-fi.

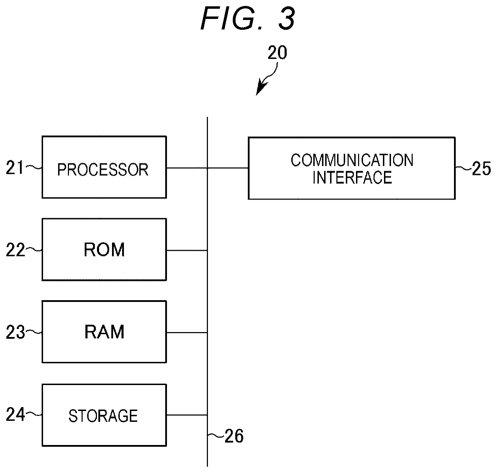

FIG. 3 is a block diagram illustrating an example of a configuration of the file server according to the embodiment. The file server 20 includes a processor 21, a ROM 22, a RAM 23, a storage 24, a communication interface 25, and a system bus 26. The system bus 26 includes an address bus, a data bus, a control signal line, and the like. The system bus 26 connects the processor 21, the ROM 22, the RAM 23, the storage 24, and the communication interface 25 to each other. The processor 21, the ROM 22, the RAM 23, and the storage 24 are connected to each other by the system bus 26.

The processor 21 controls each of portions to implement various functions of the file server 20 according to an operating system and/or an application program. The processor 21 is, for example, a CPU.

The ROM 22 is a non-volatile storage device. The ROM 22 stores a preset operating system and/or application program, control data, and the like.

The RAM 23 is a volatile storage device. The RAM 23 is used as a work area where data can be appropriately rewritten by the processor 21. The RAM 23 is also used as a buffer memory for temporarily storing data.

The storage 24 is an auxiliary storage unit or the like. The storage 24 stores data used by the processor 21 in performing various kinds of processing or data generated by the processing in the processor 21. The storage 24 may also store the application program described above. The storage 24 is, for example, an EEPROM, an HDD, or an SSD.

The communication interface 25 is an interface for communicating with other devices connected via a network. The communication interface 25 is used for communication with external devices. In this context, external devices include, for example, the processing server 10, the OCR server 30, the user terminal 40, and the ERP server 50. The communication interface 25 is configured with a LAN connector or the like, for example. The communication interface 25 may wirelessly communicate with other devices according to a communicate standard such as Wi-fi.

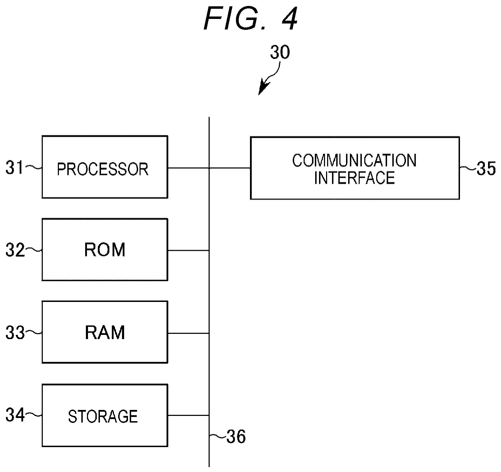

FIG. 4 is a block diagram illustrating an example of a configuration of the OCR server according to the embodiment. The OCR server 30 includes a processor 31, a ROM 32, a RAM 33, a storage 34, a communication interface 35, and a system bus 36. The system bus 36 includes an address bus, a data bus, a control signal line, and the like. The system bus 36 connects the processor 31, the ROM 32, the RAM 33, the storage 34, and the communication interface 35 to each other. The processor 31, the ROM 32, the RAM 33, and the storage 34 are connected to each other by the system bus 36.

The processor 31 implements various functions of the OCR server 30 according to an operating system and/or an application program. The processor 31 is, for example, a CPU.

The ROM 32 is a non-volatile storage device. The ROM 32 stores a preset operating system and/or application program, control data, and the like.

The RAM 33 is a volatile storage device. The RAM 33 is used as a work area where data can be appropriately rewritten by the processor 31. The RAM 33 is also used as a buffer memory for temporarily storing data.

The storage 34 is an auxiliary storage unit or the like. The storage 34 stores data used by the processor 31 in performing various kinds of processing or data generated by the processing in the processor 31. The storage 34 may also store the application program described above. The storage 34 is, for example, an EEPROM, an HDD, or an SSD.

The communication interface 35 is an interface for communicating with other devices connected via a network. The communication interface 35 is used for communication with external devices. In this context, external devices include, for example, the processing server 10, the file server 20, the user terminal 40, and the ERP server 50. The communication interface 35 is configured with a LAN connector or the like, for example. The communication interface 35 may wirelessly communicate with other devices according to a communication standard such as Wi-fi.

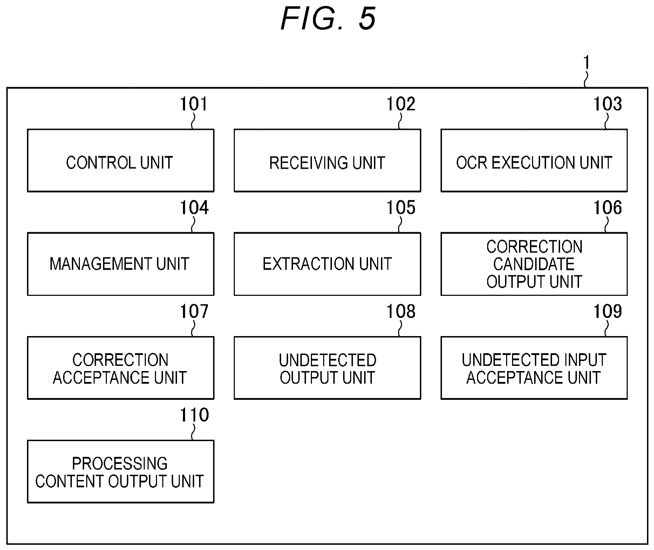

FIG. 5 is a block diagram illustrating an example of functional units in the information processing system according to the embodiment. The various functions of the information processing system 1 can also be expressed as the set of functional units illustrated in FIG. 5. The information processing system 1 includes a control unit 101, a receiving unit 102, an OCR execution unit 103, a management unit 104, an extraction unit 105, a correction candidate output unit 106, a correction acceptance unit 107, an undetected output unit 108, an undetected input acceptance unit 109, and a processing content output unit 110.

The control unit 101 controls the overall operation of the information processing system 1. The functions of the control unit 101 are implemented when the processor 11 of the processing server 10 executes the application program stored in the ROM 12 or the storage 14, for example.

The receiving unit 102 receives image information from the user terminal 40 and stores the received image information. The functions of the receiving unit 102 are implemented when the processor 21 of the file server 20 controls the communication interface 25 to receive image information and the storage 24 to store the received image information.

The OCR execution unit 103 executes OCR processing on the image information stored in the file server 20, and obtains a recognition result. For example, the OCR execution unit 103 extracts keywords and values corresponding to the keywords from the image information using an artificial intelligence (AI) technology. The function of the OCR execution unit 103 is implemented when the processor 31 of the OCR server 30 controls the communication interface 35 to receive the image information from the file server 20 and executes the application program stored in the ROM 32 or the storage 34 to perform OCR processing, for example.

The management unit 104 stores definition data that defines a workflow of a series of processes based on the received image information. The function of the management unit 104 is implemented when the processor 11 of the processing server 10 controls the storage 14 to store the definition data, for example.

The extraction unit 105 extracts usage items to be handled in the workflow from the definition data stored in the management unit 104. The function of the extraction unit 105 is implemented when the processor 11 of the processing server 10 executes the application program stored in the ROM 12 or the storage 14, for example.

The correction candidate output unit 106 extracts, from the recognition result obtained by the OCR execution unit 103, values corresponding to the usage items obtained by the extraction unit 105, and outputs these values as correction candidates. The function of the correction candidate output unit 106 is implemented when the processor 11 of the processing server 10 executes the application program stored in the ROM 12 or the storage 14, for example.

The correction acceptance unit 107 accepts user corrections of the correction candidates. The function of the correction acceptance unit 107 is implemented when the processor 11 of the processing server 10 executes the application program stored in the ROM 12 or the storage 14 and receives a correction command via the communication interface 15, for example.

The undetected output unit 108 outputs, as undetected items, items not included in the recognition result obtained by the OCR execution unit 103, from the usage items obtained by the extraction unit 105. The function of the undetected output unit 108 is implemented when the processor 11 of the processing server 10 executes the application program stored in the ROM 12 or the storage 14, for example.

The undetected input acceptance unit 109 accepts an input from the user regarding the undetected items obtained by the undetected output unit 108. The function of the undetected input acceptance unit 109 is implemented when the processor 11 of the processing server 10 executes the application program stored in the ROM 12 or the storage 14 and receives an input command via the communication interface 15, for example.

The processing content output unit 110 outputs processing content indicators indicating how the usage items obtained by the extraction unit 105 are to be used in the workflow. The function of the processing content output unit 110 is implemented when the processor 11 of the processing server 10 executes the application program stored in the ROM 12 or the storage 14, for example.

### <Operation>

The information processing system 1 according to the embodiment performs a workflow setting operation and a workflow executing operation. The workflow setting operation and the workflow executing operation in the information processing system 1 will be described below.

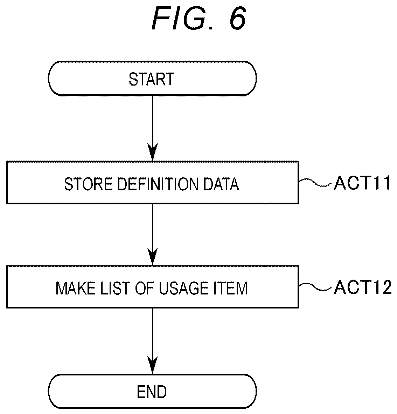

FIG. 6 is a flowchart illustrating the workflow setting operation in the information processing system according to the embodiment. When a user operates the user terminal 40 to set up a workflow (START), the information processing system 1 stores definition data (ACT11). In particular, the management unit 104 of the information processing system 1 stores definition data that defines a workflow based on settings input via the user terminal 40 by the user.

The information processing system 1 makes a list of usage items (ACT12). In particular, the extraction unit 105 of the information processing system 1 extracts, from the definition data, the usage items to be handled in the workflow that has been defined by the definition data, and stores these usage items as a usage item list.

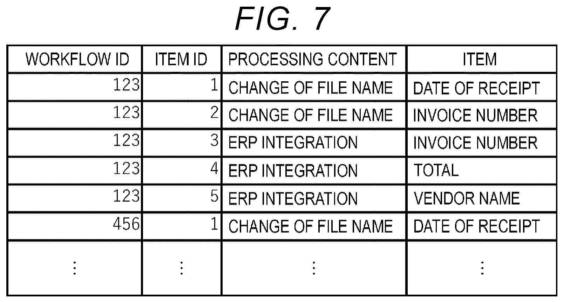

FIG. 7 is a table illustrating an example of a usage item list as used in the information processing system 1 according to the embodiment. As illustrated in FIG. 7, the usage item list records a workflow ID, an item ID, a processing content, and an item. The workflow ID entry is an identification number for identifying the particular definition data. The item ID entry can be a serial (indexing) number of the item being handled in the workflow. The processing content entry indicates what processing is to be performed using a value of an item obtained in the workflow. The item entry indicates an item type or the like handled in the workflow. In the example illustrated in FIG. 7, five item entries corresponding to a workflow ID "123" are listed. An item entry with the item ID of "1 " and a processing content of "change of file name" is "date of receipt". An item entry with the item ID of "2" and a processing content of "change of file name" is "invoice number". An item entry with the item ID of "3" and a processing content of "ERP integration" is "invoice number". An item entry with the item ID of "4" and a processing content of "ERP integration" is "total". An item entry with the item ID of "5" and a processing content of "ERP integration" is "vendor name".

Referring back to FIG. 6, the process in ACT12 is completed, and the series of processes illustrated in FIG. 6 is terminated (END).

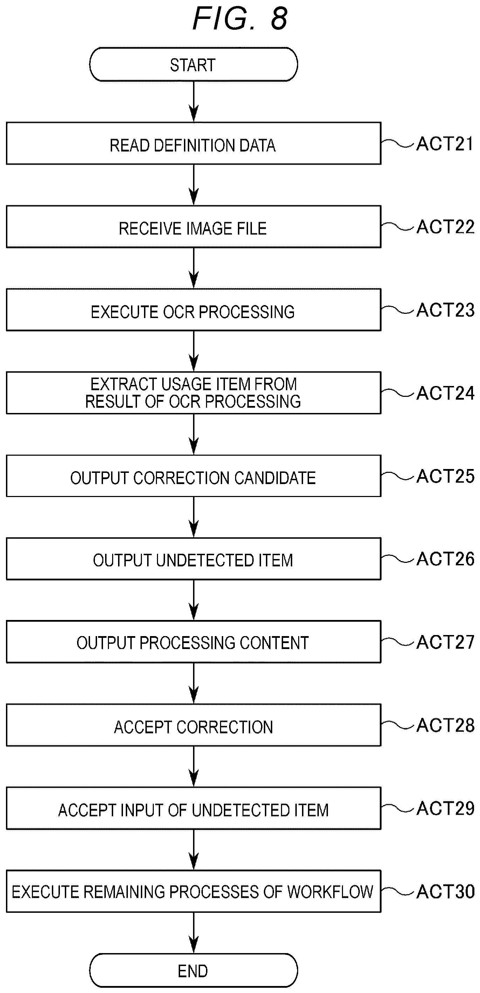

FIG. 8 is a flowchart illustrating a workflow executing operation in the information processing system according to the embodiment. When a user operates the user terminal 40 to command execution of the workflow (START), the information processing system 1 reads out definition data (ACT21). In particular, the management unit 104 of the information processing system 1 reads out definition data of the workflow corresponding to the command executed by the user.

The information processing system 1 receives an image file (ACT22). In particular, the receiving unit 102 of the information processing system 1 receives, from the user terminal 40, the image file used in the workflow.

The information processing system 1 performs OCR processing (ACT23). In particular, the OCR execution unit 103 performs OCR processing on the image file (received in ACT22), and obtains a recognition result.

The information processing system 1 extracts a usage item from the result of the OCR processing (ACT24). In particular, the correction candidate output unit 106 extracts as a correction candidate, from the recognition result obtained in ACT23, a value corresponding to the usage item extracted by the extraction unit 105.

The information processing system 1 outputs the correction candidate (ACT25). In particular, the correction candidate output unit 106 outputs the correction candidate, which was extracted in ACT24, to the user terminal 40. In the present embodiment, the correction candidate output unit 106 outputs the correction candidate and the image file received in ACT22 to the user terminal 40 so as to display the correction candidate and the image file side by side.

The information processing system 1 outputs an undetected item (ACT26). In particular, the undetected output unit 108 outputs, as undetected items, items not included in the recognition result extracted in ACT23, from the usage items obtained by the extraction unit 105, to the user terminal 40.

The information processing system 1 outputs the processing content indicator (ACT27). In particular, the processing content output unit 110 outputs the processing content indicator to the user terminal 40 indicating how each of the usage items (extracted by the extraction unit 105) is to be used in the workflow.

The user terminal 40 prompts the user to confirm whether to correct the correction candidate and what values to input for the undetected item, and transmits the results to the information processing system 1.

The information processing system 1 accepts the correction (ACT28). In particular, the correction acceptance unit 107 of the information processing system 1 accepts the correction from the user for the correction candidate output in ACT25, and modifies the value accordingly.

The information processing system 1 accepts the input of the undetected item (ACT29). In particular, the undetected input acceptance unit 109 accepts the input from the user for the undetected item output in ACT26, and updates the value.

The information processing system 1 executes remaining processes of the workflow (ACT30). In particular, the control unit 101 executes any remaining processes that have not yet been executed in the workflow as defined by the definition data read that was read in ACT21. For example, in a case of the workflow with a workflow ID "123" illustrated in FIG. 7, a process of "change of file name" and a process of "ERP integration" remain to be performed. The process of "change of file name" is a process for changing the file name of the image file stored in the file server 20. The process of "ERP integration" is a process for transmitting the value of each of the items obtained in the processes from ACT21 to ACT29 in FIG. 8 and the image file on which the process of "change of file name" was performed, to the ERP server 50.

When ACT30 is completed, the series of processes illustrated in FIG. 8 ends (END).

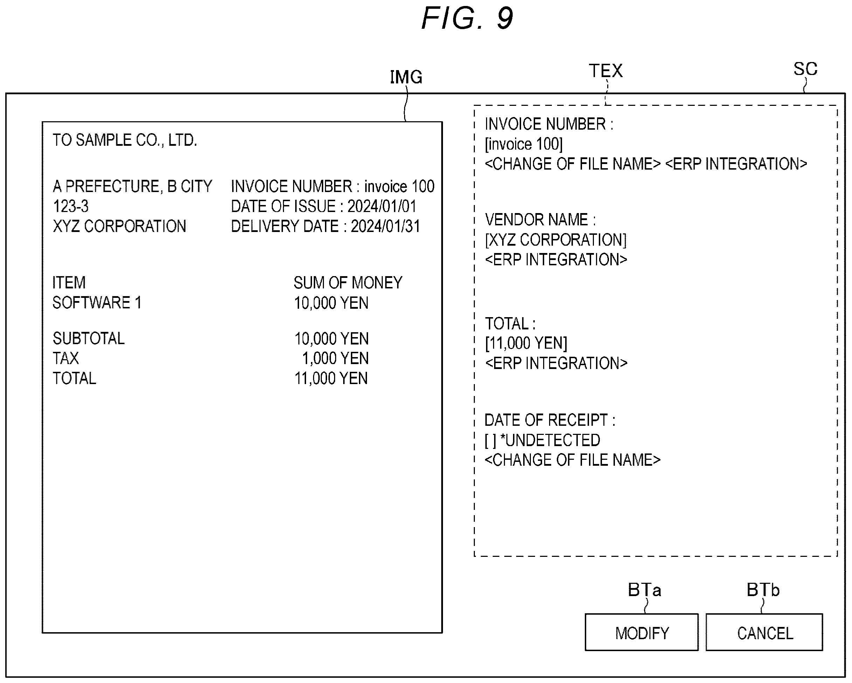

FIG. 9 is a diagram illustrating an example of a screen to be displayed on the user terminal by the information processing system according to an embodiment. As illustrated in FIG. 9, a screen SC includes an image IMG, a confirmation display TEX, a modify button BTa, and a cancel button BTb. The screen SC is displayed on a display of the user terminal 40. The image IMG is display of the image file used in the workflow, which was transmitted to the information processing system 1 from the user terminal 40. The confirmation display TEX indicates a set of correction candidates and values thereof, and processing content. In the example illustrated in FIG. 9, items of "invoice number", "vendor name", "total", and "date of receipt" are displayed. For the item "invoice number", as an OCR processing result, a value "invoice 100" is obtained, and the user is prompted to check whether correction is necessary. In addition, for the item "invoice number", it is also indicated that the item is used in the process of "change of file name" and the process of "ERP integration" in the workflow. For the item "vendor name", as an OCR processing result, a value "XYZ Corporation" is obtained, and the user is prompted to check whether correction is necessary. In addition, for the item "vendor name", it is also indicated that the item is used in the process of "ERP integration" in the workflow. For the item "total", as an OCR processing result, a value "11,000 yen" is obtained, and the user is prompted to check whether correction is necessary. In addition, for the item "total", it is also indicated that the item is used in the process of "ERP integration" in the workflow. For the item "date of receipt", an "undetected" value is entered indicating that no value corresponding to this item was detected in the OCR processing result, and a blank is displayed for the user to fill in. In addition, for the item "date of receipt", it is also indicated that the item is used in the process of "change of file name" in the workflow. When the user presses the modify button BTa, a process is performed to confirm the correction shown in the confirmation display TEX. When the user presses a cancel button BTb, the execution of the workflow is stopped.

### <Effects>

In the system including the OCR processing, for example, the user confirms and corrects whether characters have been correctly recognized. For example, when the OCR processing recognizes characters by specifying a plurality of areas, or utilizes an AI technology to extract keywords and values corresponding to the keywords, recognition results may be output for many items. However, if recognition results are output even for items that are not utilized in the current workflow and the user is asked to confirm whether each has been correctly recognized, the burden on the user may increase unnecessarily.

According to an embodiment, the information processing system 1 includes: a receiving unit 102 that receives the image information; an OCR execution unit 103 that performs character recognition on the image information using OCR; a management unit 104 that stores the definition data that defines the workflow to be performed in association with the image information; an extraction unit 105 that extracts from the definition data those usage items handled (used) in the workflow; a correction candidate output unit 106 that extracts the values corresponding to the usage items in the recognition result obtained by the OCR execution unit and outputs the values as correction candidates; and a correction acceptance unit 107 that accepts the correction for the correction candidates from a user. Accordingly, the information processing system 1 check and correct the results of OCR processing related only to those items that are utilized in the workflow. Therefore, the information processing system 1 can reduce the workload of the user by allowing the user avoid checking items that are not utilized in the workflow.

According to an embodiment, the information processing system 1 further includes an undetected output unit 108 configured to output, as an undetected item, an item in the usage items but not included in the recognition result, and the undetected input acceptance unit 109 configured to accept the user's input of a value or the like for an undetected item. Accordingly, the information processing system 1 can prompt the user to input an item used in the workflow even if the item was not recognized by the OCR processing. Therefore, the information processing system 1 can prevent an item that is used in the workflow from being omitted from the processing even if not detected by the OCR processing and thus prevent the processing of the workflow from being interrupted.

According to an embodiment, the information processing system 1 further includes the processing content output unit 110 configured to output a processing content indicator indicating how a usage item is used in the workflow. Accordingly, the information processing system 1 can show to the user what kind of processing will be performed using the item in the workflow. Therefore, the information processing system 1 can convey the importance of an item in the processing to the user, and can prompt the user to check more fully the result of the OCR processing.

According to an embodiment, the OCR execution unit 103 extracts keywords and values corresponding to the keywords from the image information using AI technology. In this way, when the AI technology is used in OCR processing, it is possible to recognize many items without specifying an area (field) in advance, as compared to standard OCR processing in which an area of an image has to be specified in advance and all characters are recognized, for example. In other words, it is possible to reduce issues involved in the OCR processing by utilization of the AI technology. The amount of confirmation and correction work required by the user may increase as the number of recognizable items increases, but according to the embodiment, the user is prompted to confirm the results of the OCR processing, only for items that are utilized in the workflow. Therefore, according to an embodiment, even when the AI technology is used in the OCR processing, it is possible to prevent an increase in the amount of confirmation and correction work required by the user. In this way, the OCR processing using the AI technology becomes more suitable as the OCR processing used in the embodiment.

According to the embodiment, the correction candidate output unit 106 outputs the image information and the correction candidate so as to display the image information and the correction candidate side by side. Accordingly, the information processing system 1 can display the image information and the result of the OCR processing side by side to the user, and the user can easily confirm the results of the OCR processing. Therefore, the information processing system 1 according to an embodiment can reduce the workload of the user.

### <Other Modifications>

In an embodiment, a case has been described in which the function of the OCR execution unit 103 is implemented when the processor 31 executes an application program to perform the OCR processing is described. The OCR server 30 may include a component other than the processor 31 that performs a calculation, and the OCR processing may be executed by hardware other than the processor 31. For example, the OCR server 30 may further include an AI calculation unit that is a calculation unit specialized for processing utilizing AI technology, and the function of the OCR execution unit 103 may be implemented when the AI calculation unit performs calculations.

In an embodiment, a case has been described in which the information processing system 1 includes the processing server 10, the file server 20, and the OCR server 30. The information processing system 1 may include, in addition to these components, any other component as long as each of the functional units described with reference to FIG. 5 is implemented. In some examples, the information processing system 1 may be implemented by a single server or may be implemented within a user terminal 40.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirit of the disclosure.

## Claims

1. An information processing system, comprising:
a receiving unit (102) configured to receive image information corresponding to a document from a user terminal;
an OCR execution unit (103) configured to perform character recognition on the image information using optical character recognition (OCR);
a management unit (104) configured to store definition data that defines a workflow associated with the image information;
an extraction unit (105) configured to extract a usage item from the definition data of the workflow;
a correction candidate output unit (106) configured to extract a value corresponding to the extracted usage item from a recognition result from the OCR execution unit and output the value as a correction candidate; and
a correction acceptance unit (107) configured to receive a correction of the correction candidate from the user terminal.

2. The information processing system according to claim 1, further comprising:
an undetected output unit configured to identify any extracted usage item without a corresponding value in the recognition result and output any so identified usage item to the user terminal, as an undetected item; and
an undetected input acceptance unit configured to receive an input of a value for the undetected item from the user terminal.

3. The information processing system according to claim 1 or 2, further comprising:
a processing content output unit configured to output a processing content indicator indicating how the usage item is used in the workflow.

4. The information processing system according to any one of claims 1 to 3, wherein the OCR execution unit extracts a keyword and a value corresponding to the keyword from the image information using AI technology.

5. The information processing system according to any one of claims 1 to 4, wherein the correction candidate output unit outputs the image information and the correction candidate so as to display the image information and the correction candidate side by side at the user terminal.

6. The information processing system according to any one of claims 1 to 5, wherein correction candidate output unit outputs only values corresponding to extracted usage items as correction candidates.

7. The information processing system according to any one of claims 1 to 6, wherein the document is an invoice.

8. The information processing system according to any one of claims 1 to 7, further comprising:
a processing server (10) for controlling operations of the information processing system;
a file server (20) configured to receive image information and store the received image information; and
an OCR server (30) for executing OCR processing in the image information.

9. The information processing system according to claim 8, wherein the OCR execution unit (103) configured to perform character recognition on the image information stored in the file server (20) and obtain a recognition result.

10. A control method for an information processing system, the control method comprising:
receiving image information corresponding to a document from a user terminal;
performing character recognition on the image information using optical character recognition (OCR);
storing definition data that defines a workflow associated with the image information;
extracting a usage item from the definition data of the workflow;
extracting a value corresponding to the extracted usage item from a recognition result from the OCR execution unit and outputting the value as a correction candidate; and
receiving a correction of the correction candidate from the user terminal.

11. The control method according to claim 10, further comprising:
identifying any extracted usage item without a corresponding value in the recognition result and outputting any so identified usage item to the user terminal, as an undetected item; and
receiving an input of a value for the undetected item from the user terminal.

12. The control method according to claim 10 or 11, further comprising:
outputting a processing content indicator indicating how the usage item is used in the workflow to the user terminal.

13. The control method according to any one of claims 10 to 12, wherein a keyword and a value corresponding to the keyword are extracted from the image information using AI technology.

14. The control method according to any one of claims 10 to 13, wherein the image information and the correction candidate are output so as to display the image information and the correction candidate side by side at the user terminal.

15. The control method according to any one of claims 10 to 14, wherein only values corresponding to extracted usage items are output as correction candidates.
